Europäisches Patentamt

European Patent Office

Office européen des brevets

(19)

(11) Publication number: **0 227 254**
**A1**

# (12) EUROPEAN PATENT APPLICATION

(21) Application number: **86308262.4**

(22) Date of filing: **23.10.86**

(51) Int. Cl.⁴: **B 65 G 47/24**

(30) Priority: **26.10.85 GB 8526448**
**09.01.86 GB 8600418**

(43) Date of publication of application:
**01.07.87 Bulletin 87/27**

(84) Designated Contracting States:
**DE FR GB NL**

(71) Applicant: **WILSON FOODS CORPORATION**
**4545 North Lincoln Boulevard**
**Oklahoma City Oklahoma 73104(US)**

(72) Inventor: **Whitehouse, John Arthur**
**8 Old Rectory Close Mulbarton**
**Norwich Norfolk(GB)**

(74) Representative: **Nash, Keith Wilfrid**
**KEITH W. NASH & Co. Pearl Assurance House 90-92**
**Regent Street**
**Cambridge CB2 1DP(GB)**

(54) **Article handling apparatus.**

(57) Apparatus for controlling the flight of articles between one conveyor (22) and receptacles (90) on a second conveyor is described. The apparatus comprises at least one nozzle (100) adjustably positioned in the region of the free flight path and a source of air (101) under a controlled pressure and valve means (105) for controlling the release of air to the nozzle (100) in response.

- 1 -

C190/W

Title:  Improvements in and relating to article handling apparatus

## Field of invention

This invention concerns article handling apparatus in particular apparatus by which articles can be orientated as desired as they leave a delivery conveyor for collection on a take-off conveyor.

## Background to the invention

It is known to deliver articles from one conveyor to another so as to achieve a change of direction or rearrangement of the alignment of articles. However, it is often desired to offload articles from one conveyor into trays or other receptacles located on a take-off conveyor and to orientate the articles in such a manner as to cause two or more such articles to be stacked one partly overlying the other on the tray so that two or more articles are collected by each tray at the delivery point. To achieve this it is necessary to ensure that the angle at which the articles hit the tray is correct to achieve the desired objective and it is an object of the present invention to provide apparatus for achieving this purpose.

The invention is of particular application in the handling and packaging of meat, particularly in the shingling of pork meat chops onto trays for the pre-packed meat market.

## Summary of the invention

According to the present invention in apparatus for delivering articles from a delivery conveyor to a take-off conveyor and in which the articles travel with free flight in the transfer region between the one conveyor and the other, airjet means is provided in the transfer region with means for generating at least one puff of air in synchronism with the free flight of an article from the one conveyor to the other, the airjet means being adjusted so as to direct the puff of air towards the article in such a manner as to cause the article to be deflected by a predetermined amount  whilst in free flight.

Preferably the airjet means is adjustable to enable a fine tuning of the direction of the air puff to be obtained.

Preferably the means for generating the puff of air is also adjustable so as to control both the pressure or volume of each puff.

Advantageously, two or more puffs may be generated and delivered during the flight of each article to further control the orientation of the articles.

The invention is not limited to the placement of a single airjet means in the transfer region and two  or more such airjet means may be provided operating from the same or different sources of air pressure each of which may be adjustable in direction with means for adjusting the pressure and volume of the puff of air as required.

Preferably proximity switch means is provided to detect the presence of an article as it approaches the end of the delivery conveyor to cause the air puff generation means to release a puff of air after an appropriate time interval as the article leaves the delivery conveyor and begins its free flight towards the takeup conveyor.

The provision of airjet means in accordance with the invention can be used to not only alter the orientation of the product but can accelerate or decelerate the articles as required.

The invention will now be described, by way of example, with reference to the accompanying drawings, in which:

Figure 1 is a diagrammatic plan view of a packaging line incorporating apparatus embodying the invention;

Figure 2 is a general view in the direction of the arrow A of part of the apparatus shown in Figure 1;

Figure 3 is a perspective view from above of the outlet end of a delivery conveyor showing the airjet means of the invention in more detail, and

Figure 4 is a block schematic diagram of part of a control system for controlling apparatus embodying the invention.

Detailed description of drawings

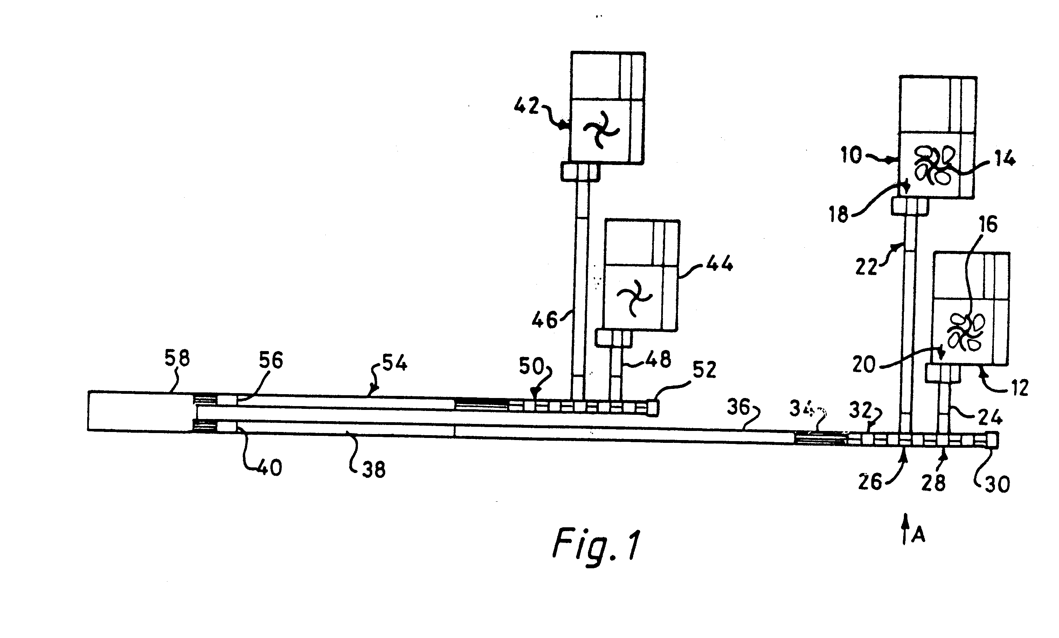

Figure 1 is a plan view of an overall packaging line in which apparatus is provided for cutting large pieces of meat into chops or similar slices and two bandsaw automatic cutting machines are shown at 10 and 12. Each includes a carousel 14 and 16 respectively on which can be mounted up to four pieces of meat from which chops can be cut as the carousel is rotated past the bandsaw. The cut pieces leave the cutting station in the direction of the arrow 18 in the case of cutter 10 and 20 in the case of cutter 12.

Conveyors generally designated 22 and 24 deliver the cut pieces to two loading stations generally designated 26 and 28 respectively.

Trays are stacked at 30 and are removed one by one and positioned on a tray conveyor generally designated 32 which incrementally moves the trays through the loading stations 26 and 28 to a transfer conveyor 34 and from thence to a main delivery conveyor 36 part of which serves as a buffer conveyor at 38 the output from which is controlled by the operation of the gate 40.

Two further meat cutting machines at 42 and 44 are also shown with associated conveyors 46 and 48 for supplying the second tray conveyor 50. This second apparatus is optional and simply indicates how throughput could be increased.

In its simplest form the apparatus comprises a single cutting machine such as 10 and associated conveyor 22 and related tray conveyor 32 with tray stack and delivery station 30.

For further information relating to the cutting and handling apparatus of Figures 1 - 3, reference is made to my co-pending United States patent application filed concurrently herewith and entitled "Improvements in and relating to packaging apparatus."

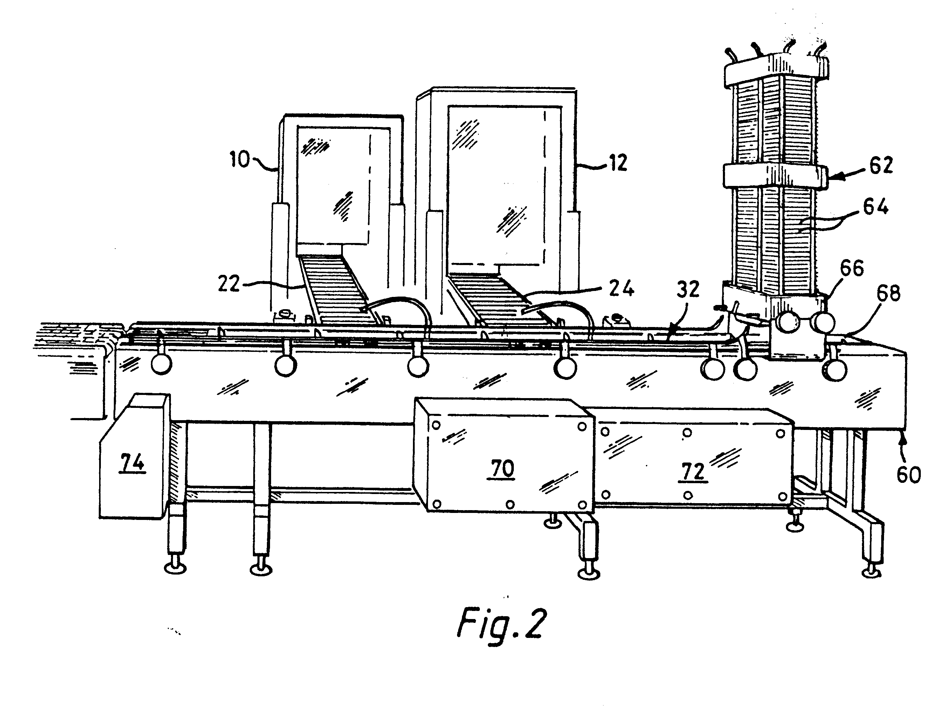

Figure 2 is a perspective view of the apparatus in the direction of arrow A of Figure 1. Thus the two meat cutting machines 10 and 12 can be seen in the background with their associated conveyors 22 and 24 feeding the tray conveyor which will be described in more detail later and which is supported by a framework 60 which extends transversely to the two feed conveyors 22 and 24.

An upright tray magazine is shown at 62 within which are stacked trays 64 one above the other. Each of the trays is generally rectangular in plan view and includes a depressed central region into which product can be laid and has a peripheral lip.

The magazine 62 can be lifted clear from a support 66 to allow a fresh magazine to be fitted or simply for the magazine to be filled with trays.

A mechanism is provided for removing each tray in turn from the bottom of the stack and each such tray is engaged on a conveyor having upstanding driving dogs, one of which is shown at 68, which engage the rear edges of the trays and move them in a direction from beneath the magazine 62 towards the loading stations at the delivery ends of the conveyors 24 and 22.

The path of the conveyor (not shown) containing the dogs 68 is such that the latter rise up at the right hand end of the framework 60, move across the framework 60 from right to left in Figure 2 and descend in a downward direction at the left hand end of the framework. At that point the trays are delivered to a further conveyor.

Controls, drives and power supplies for the conveyors, tray, magazine and control of the delivery of trays from the conveyors 22 and 24 onto the tray conveyor 32 are contained within units 70, 72 and 74 respectively.

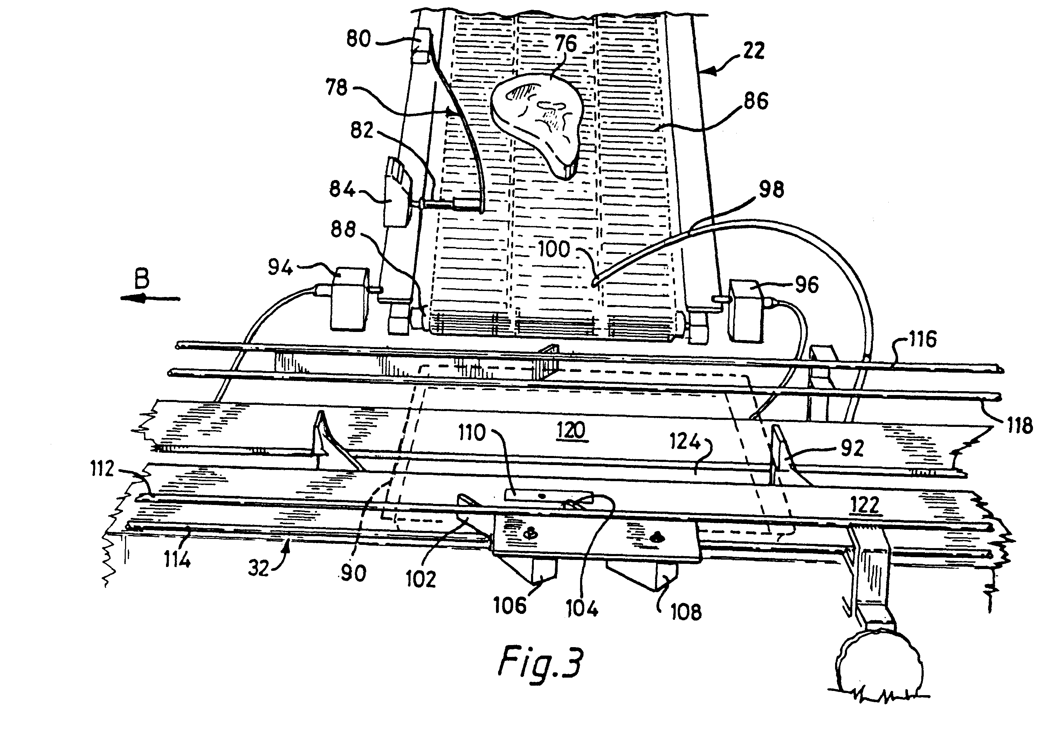

Figure 3 of the drawings illustrates to a larger scale the outlet end of the delivery conveyor 22 and the interaction of this with the tray conveyor generally designated 32. This interaction forms the delivery station or loading station where cut pieces of products are loaded into the trays. One such cut piece is shown at 76 and in practice will be preceeded and following by other similar cut pieces all travelling towards the tray conveyor 32.

To one side of the delivery conveyor 22 is an alignment guide 78 made up of a metal leaf spring anchored at 80 and adjustable in position at its downstream end by means of a screw rod 82 and block 84. Positioning of the leaf 78 determines the precise position of the cut piece across the width of the delivery conveyor 22 as they approach the exit end or outlet thereof.

Where the conveyor belt 86 of the delivery conveyor 22 passes around the end roller 88, the cut pieces 76 will fall in free flight from the end of conveyor 22 to a waiting tray, one of which is shown in dotted outline at 90.

The tray 90 is one of a number of such trays lying along the tray conveyor 32 and which are indexed in a forward direction denoted by arrow B in Figure 3 by means of the tray conveyor drive dogs of which one is shown at 92. These are attached to an endless chain (not visible in Figure 3) and the latter is driven in a series of incremental movements so as to shunt the line of trays past the loading station. As each tray is positioned in front of the loading station formed by the outlet of conveyor 22, the cut pieces leave the conveyor belt 86 and after free flight land on the tray below.

Adjacent the exit of the conveyor belt 86 are located a light source 94 and sensor 96 which together with associated electrical circuitry comprise a proximity switch. As a piece of cut product, such as 76, arrives at the exit end of the conveyor belt 86, so the optical path between 94,96 is interrupted causing an electrical signal to be generated to serve as a control signal.

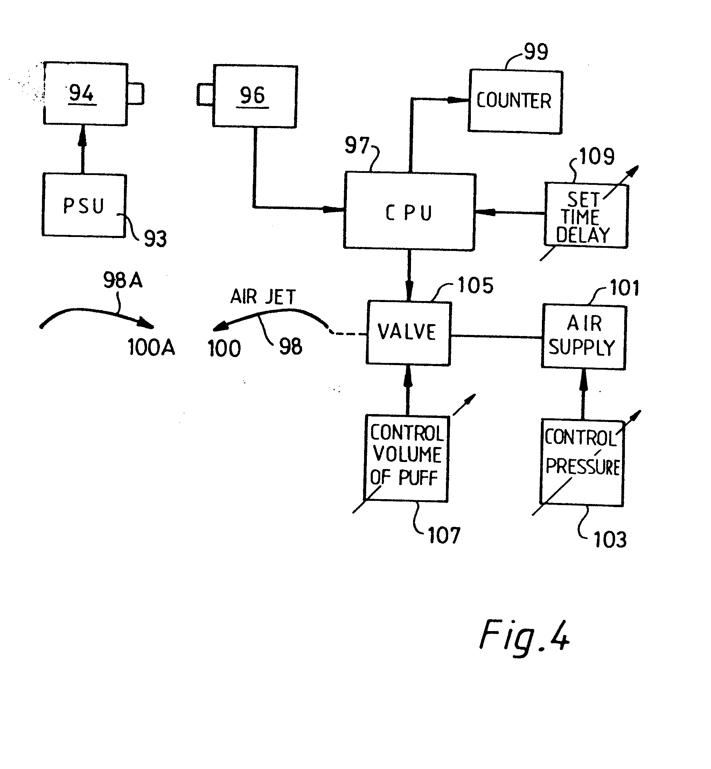

Figure 4 illustrates part of the control system of an apparatus to which the invention is applied and which is adapted to handle cut pieces of meat such as pork meat chops.

A power supply 93 drives a lamp (not shown) in the light source 94 and a light detector (not shown) is located in the receiver/sensor 96. The electrical signal output from the detector in 96 provides one input to a control processor unit 97. Each interruption in the signal from 96 is counted by a counter 99.

The pressure of the air from a supply 101 is controlled by a pressure control 103 and air is released to the tube 98 and nozzle 100 by control signals from the CPU 97 which control the operation of a valve 105 in the supply line to the nozzle.

The volume of air in each puff is controlled by a further control 107 by which the throughput of the valve can be adjusted.

The timing and duration of each puff is controlled by the control signals from the CPU 97.

A second nozzle 100A at the end of a second tube 98A may be provided, as shown, supplied either from the same valve 105 or from a second air supply system similar to the system made up of 101, 103, 105, 107 which may be controlled by the same control signals from the CPU 97 or from a further set of control signals produced by the CPU 97.

The delay between the detection of an article between 94, 96 and the generation of a control signal to the valve 105 (and any other similar valves in duplicated control systems not shown) is controlled by a time delay adjuster 109.

Further information is obtained when the optical path is re-established after the passage of a piece of cut material, allowing a further electrical signal to be generated indicating that one piece has passed and another can now be expected.

Adjacent the exit end is located an air pipe 98 having an outlet nozzle 100 which is adjustable so as to direct an airstream from the nozzle 100 towards the flight path of cut pieces such as 76 as they leave the conveyor. By appropriate adjustment of the nozzle and appropriate adjustment of pressure and volume and duration of each air pulse leaving the nozzle, so a cut piece such as 76 leaving conveyor 86 can be deflected and tilted simultaneously, so as to land in the tray in a tilted condition instead of lying flat on the bottom of the tray. This is of great advantage when the objects are to be layered in the pack to present the edge regions thereof overlying one another. This is of particular advantage when the pieces of product which are being packaged in this way are meat chops or the like.

Opposite the delivery end of conveyor belt 86 are located two spring fingers 102 and 104 which are mounted on pivot blocks 106, 108 and are sprung in a direction so as to cause the fingers to protrude into the path of the trays. The springing is very light and as each tray is pushed into the position aligned with the end of the conveyor belt 86, so the two fingers 102 and 104 are pushed out of the way by the side wall of the tray. However, there is just sufficient friction between the fingers and the tray edge to restrain the tray so that the latter is prevented from overshooting as it is pushed in a series of incremental steps past the delivery end of the conveyor belt 86 by the movement of a dog such as 92.

In addition to the fingers 102 and 104, a tray sensor 110 is located immediately below the path of the trays which is itself engaged by the underside of each tray as the latter is moved into position. Control signals from the sensor are used to instigate the operation of the cutting machine and delivery conveyor.

Signals from the sensor link 94, 96 serve to indicate that the cut pieces have arrived at the delivery end of the conveyor 22 and each piece is counted as it passes between 94 and 96. Overall control of the apparatus is achieved by means of a micro-computer controlled device having a memory into which information is stored concerning inter alia a number of pieces to be laid in each tray, the distance through which each tray must be indexed after it has arrived at the loading station so as to accommodate the desired number of cut pieces in a particular configuration within the tray etc etc. The signal from the sensor 110 thus initiates the process, the signal from the sensor link 94, 96 dictates the number of pieces which are laid in the tray and in the event that no tray supplants the first after the latter has been moved out of the delivery station, the appropriate signal from the sensor 110 temporarily halts the cutting and delivery of further pieces until the fault has been remedied.

The timing of the jet of air from the nozzle 100 is achieved using as a trigger the signal from the link 94, 96.

C190/W

## Claims

1. Apparatus for delivering articles from a delivery conveyor to a take-off conveyor in which the articles travel with free flight in the transfer region between the one conveyor and receptacles on the other, characterised by: airjet means (100) in the transfer region together with means (101, 105) for generating at least one puff of air in synchronism with the free flight of an article (76) from the one conveyor (22) to the other (32), the airjet means being adjusted so as to direct the puff of air towards the article in such a manner as to cause the article to be deflected by a predetermined amount whilst in free flight.

2. Apparatus according to claim 1 wherein the airjet means (100) is adjustable to vary the direction of the airpuff to be obtained.

3. Apparatus according to claim 1 wherein the means for generating the puff of air (101, 105) includes adjustment means (103) to control the pressure of the air producing each puff.

4. Apparatus according to claim 1 wherein a second airjet means (98A, 100A) is provided for producing a second puff of air in the same transfer region as the first mentioned airjet means for further altering the flight of the articles thereacross.

5. Apparatus according to claim 4 wherein the second airjet means (98A, 100A) is adjustable to control the direction of the said second airpuff.

6. Apparatus according to claim 4 wherein the same means for generating an air puff supplies air to both the first mentioned and the second airjet means.

7. Apparatus according to claim 4 wherein a second means for generating an airpuff serves to provide air to the second airjet means (98A, 100A).

8. Apparatus according to claim 1 further comprising proximity switch means (94, 96) for detecting the presence of an article as it approaches the end of the delivery conveyor to cause the air puff generation means (101, 105) to release a puff of air after an appropriate time interval determined by adjuster (109), as the article leaves the delivery conveyor and begins its free flight towards the takeup conveyor.

9. Apparatus according to claim 1 wherein the airjet means (98, 100) serves to accelerate the articles in the direction of flight.

10. Apparatus as set forth in claim 1 wherein the airjet means (98, 100) serves to decelerate the articles in the direction of flight.

Fig.1

*Fig.2*

2/4

0227254

Fig.3

Fig.4

**European Patent Office**

## EUROPEAN SEARCH REPORT

Application number

| | DOCUMENTS CONSIDERED TO BE RELEVANT | | EP 86308262.4 |
|---|---|---|---|

| Category | Citation of document with indication, where appropriate, of relevant passages | Relevant to claim | CLASSIFICATION OF THE APPLICATION (Int. Cl 4) |
|---|---|---|---|
| Y | US - A - 4 219 110 (UBUKATA)<br>* Fig. 1 *<br>-- | 1 | B 65 G 47/24 |
| Y | US - A - 3 623 595 (BROWN)<br>* Fig. 1 *<br>-- | 1 | |
| A | US - A - 4 172 513 (BRADSTREET et al.)<br>* Abstract *<br>-- | | |
| A | US - A - 3 747 738 (GRECK)<br>* Page 1 *<br>---- | | |

| | | TECHNICAL FIELDS SEARCHED (Int Cl 4) |
|---|---|---|
| | | B 65 G |

The present search report has been drawn up for all claims

| Place of search | Date of completion of the search | Examiner |
|---|---|---|
| VIENNA | 02-02-1987 | PANGRATZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82